# EUROPÄISCHE PATENTSCHRIFT

(11) **EP 2 910 416 B1**
(45) Veröffentlichungstag und Bekanntmachung des Hinweises auf die Patenterteilung: **31.07.2019**
(21) Anmeldenummer: 15155372.4
(22) Anmeldetag: 17.02.2015
(51) Int. Cl.: B62D 53/00

(54) **Anhänger für einen Routenzug**
Trailer for a route train
Remorque de chariot tracteur

(30) Priorität: 24.02.2014 DE 102014102371
(43) Veröffentlichungstag der Anmeldung: 26.08.2015
(73) Patentinhaber: Jungheinrich Aktiengesellschaft, 22047 Hamburg (DE)
(72) Erfinder: Neubauer, Dirk, 21335 Lüneberg (DE)
(74) Vertreter: Hauck Patentanwaltspartnerschaft mbB

(56) Entgegenhaltungen:
- DE-A1-102007 022 525
- DE-A1-102008 060 962
- DE-A1-102011 112 889
- DE-U1-202013 001 255
- US-A- 3 305 117

## Beschreibung

Die vorliegende Erfindung betrifft einen Anhänger für einen Routenzug mit einem Rahmen, der eine Hubeinrichtung mit einer Hubplattform aufweist.

Routenzüge werden in der Intralogistik eingesetzt, um Material und Produkte innerbetrieblich zu transportieren. Hierbei fahren die Züge auf fest vorgegebenen Routen, teilweise mit einem festen Fahrplan, um Material zu sogenannten Haltestellen oder Bahnhöfen zu transportieren. Der Routenzug selbst besteht aus einem Fahrzeug, das einen oder mehrere Anhänger schleppt. Die Anhänger nehmen sogenannte Innenwagen auf, bei denen es sich um Trolleys, Rollpaletten, Korbwagen und dergleichen handeln kann. Der Innenwagen fährt mit Hilfe des Anhängers in dem Routenzug mit. Hierbei kann der Innenwagen selbst fahren und von dem Anhänger lediglich geführt werden oder der Innenwagen ist in dem Anhänger angehoben und wird während des Transports ohne Bodenkontakt mit dem Anhängers verfahren.

Aus DE 10 2007 022 525 A1 ist ein Trailerzuganhänger bekannt geworden, der einen Rahmen zur Aufnahme eines innerhalb des Rahmens positionierten Innenwagens sowie mindestens eine zentral angeordnete Starrachse aufweist. Bei dem bekannten Trailerzuganhänger wird der zu transportierende Innenwagen mit Hilfe eines auf einem mittleren Querträger angeordneten Schlittens auf den Querträger gezogen und dort verriegelt.

Aus JP 10-291473 ist ein U-förmiger Anhänger für einen Innenwagen bekannt geworden, der auf seinem Rahmen vier Hubeinrichtungen zum Anheben eines eingeschobenen Innenwagens aufweist.

Aus DE 603 00 189 T2 ist ein Anhänger für einen Transportzug bekannt geworden, wobei der Anhänger eine Mittelstrebe aufweist, auf die der Innenwagen geschoben werden kann.

Aus DE 10 2007 022 525 A1 ist für einen Trailerzuganhänger ein Ausschiebesystem bekannt, das einen transportierten Innenwagen nach dem Transport aus schiebt, um dessen Räder auszurichten. Eine Hubeinrichtung ist an dem Trailerzuganhänger nicht vorgesehen.

Aus DE 20 2013 001 255 U1 ist ein Anhänger eines Routenzuges bekannt geworden, der ein Fahrgestell und einen über ein Hubwerk zwangsgeführten, im Fahrgestell gehaltenen Lastenträger aufweist. Fahrgestell und Lastenträger sind über einen Drehschubgelenk miteinander verbunden, wobei das Hubwerk wenigstens ein dem Drehschubgelenk zugeordnetes Kurvengetriebe aufweist. Durch das Kurvengetriebe wird der Lastenträger gehoben und mit seinen freien Enden von einer Aufstandsfläche fortgeschwenkt.

Der Erfindung liegt die Aufgabe zugrunde, einen Anhänger für einen Routenzug bereitzustellen, der in besonders einfacher Weise mit einem zu transportierenden Innenwagen zusammenwirkt und dessen Handhabung beim Entfernen des Innenwagens erleichtert.

Erfindungsgemäß wird die Aufgabe durch einen Anhänger mit den Merkmalen aus Anspruch 1 gelöst. Vorteilhafte Ausgestaltungen bilden den Gegenstand der Unteransprüche.

Der erfindungsgemäße Anhänger ist vorgesehen und bestimmt für einen Routenzug. Der Anhänger besitzt einen Rahmen, der eine Hubeinrichtung mit einer Hubplattform aufweist. Der zu transportierende Innenwagen wird in den Rahmen auf oder über die Hubplattform geschoben, die über die Hubeinrichtung angehoben wird, um den Innenwagen in seinem angehobenen Zustand ohne Bodenkontakt mit dem Anhänger zu verfahren. Die Hubplattform senkt sich bei einem Senkvorgang so weit ab, dass der Innenwagen von der Hubplattform freikommt. Erfindungsgemäß wird bei einer Senkbewegung der Hubplattform der Innenwagen quer zur Absenkrichtung um eine vorbestimmte Strecke aus dem Rahmen geschoben, wobei der Innenwagen bereits Bodenkontakt hat. Die Senkbewegung der Hubplattform
besitzt zwei Bewegungskomponenten, eine Bewegungskomponente, die das Absenken beschreibt und eine Bewegungskomponente, die die Vorschubbewegung des Innenwagens beschreibt. Durch die Vorschubbewegung ist der Innenwagen mit seinen Rändern bei Abschluss der Senkbewegung direkt ausgerichtet, um von Hand, ohne Ausrichtung der Räder, geschoben zu werden. Bei einem Transport im angehobenen Zustand nehmen die lenkbaren Räder des Innenwagens in der Regel eine zufällige Stellung ein. Durch eine Senkbewegung, bei der auch eine Bewegungskomponente zum Ausschieben des Innenwagens auf dem Rahmen vorgesehen ist, erfolgt eine Ausrichtung der lenkbaren Räder an dem Innenwagen. Gerade bei einem schwer beladenen Innenwagen kann dieser dann direkt ohne Ausrichten der lenkbaren Räder verschoben werden.

Erfindungsgemäß ist die Hubeinrichtung mit einer Zug-/Druckstange ausgestattet und weist mindestens einen Dreieckhebel auf. Der Dreieckhebel ist an seinem ersten Ende an dem Rahmen, seinem zweiten Ende an der Hubplattform und seinem dritten Ende an der Zug-/Druckstange schwenkbar gelagert. Zum Anheben oder Absenken der Hubplattform wird der Dreieckhebel mit Hilfe der Zug-/Druckstange verschwenkt, wobei die Schwenkachse von dem ersten rahmenfest angeordneten Ende des Dreieckhebels gebildet wird. Das mit der Hubplattform schwenkbar verbundene Ende des Dreieckhebels beschreibt eine bogenförmige, im Wesentlichen auf einer Kreisbahn liegende Bewegung. Bezogen auf die Hubplattform bedeutet die Verwendung eines Dreieckhebels, dass auch die Hubplattform auf einer bogenförmigen Bahn eine Schwenkbewegung beschreibt. Diese Schwenkbewegung erfüllt genau eine Bewegung, die aus der Überlagerung einer Absenkbewegung und aus einer Ausschubbewegung besteht. Vorteilhafterweise ist der Dreieckhebel so angeordnet, dass die Hubplattform bei der Absenkbewegung ungefähr einen Viertelkreis beschreibt. Die Zug-/Druckstange wird bei einer Bewegung auf Druck beansprucht und bei der entgegengesetzten Bewegung auf Zug.

In einer bevorzugten Ausgestaltung besitzt der Anhänger einen U-förmigen Rahmen mit zwei, vorzugsweise parallel zueinander angeordneten Schenkeln und einer die Schenkel verbindenden Längsstrebe. Die Hubplattform ist an der Längsstrebe zwischen den Schenkeln angeordnet. Insgesamt bildet der Rahmen mit der Hubplattform eine im Wesentlichen E-förmige Kontur. Zum Transport wird der Innenwagen von der offenen Seite in den Rahmen eingeschoben, wobei der Innenwagen hierbei auch über die Schenkel und/oder die Längsstrebe überstehen darf. Mit Hilfe der Hubplattform wird der eingeschobene Innenwagen dann soweit angehoben, bis er vom Boden freikommt. In der angehobenen Position wird der Innenwagen dann über den Anhänger verfahren.

In einer weiteren bevorzugten Ausgestaltung ist die Hubplattform mit einem Ausschubvorsprung ausgestattet, der mit einem zu transportierenden Innenwagen zusammenwirkt und den Innenwagen bei der Senkbewegung der Hubplattform aus dem Rahmen schiebt. Der auf der Hubplattform angeordnete Innenwagen liegt an dem Ausschubvorsprung der Hubplattform an. Durch die bevorzugt bogenförmige Schwenkbewegung der Hubplattform beim Senkvorgang schiebt der Ausschubvorsprung den Innenwagen nach vorne aus dem Rahmen. Bei diesem Vorschieben richten sich die Räder des Innenwagens in Vorschubrichtung aus. Die Räder richten sich dabei genau in die Richtung aus, in der der Innenwagen vollständig aus dem Rahmen des Anhängers geschoben werden kann.

In einer bevorzugten Ausgestaltung ist der Ausschubvorsprung als ein parallel zum Rahmen und zum Längs schenkel angeordneter Steg auf der Hubplattform ausgebildet. In dieser Ausgestaltung dient der Ausschubvorsprung als Anschlag für einen auf die Hubplattform geschobenen Innenwagen. Der Innenwagen wird dann bis an den Ausschubvorsprung aufgeschoben und an diesem anliegend angehoben.

Bei der Absetzbewegung überträgt der Ausschubvorsprung die Querbewegung der Hubplattform auf den abgesenkten Innenwagen.

In einer bevorzugten Ausgestaltung ist die Hubeinrichtung als eine elektrohydraulische Einheit ausgebildet, die mindestens eine Zug-/Druckstange zum Heben und Senken der Hubplattform betätigt. Die Vorschubbewegung der Hubeinrichtung aus dem Rahmen heraus kann zusätzlich durch ein Federelement unterstützt werden, das eine zusätzliche Kraft für die Vorschubbewegung aufbringt.

Ein bevorzugtes Ausführungsbeispiel wird nachfolgend anhand der Figuren näher beschrieben. Es zeigen:
- Fig. 1: den erfindungsgemäßen Anhänger mit abgesenkter Hubplattform,
- Fig. 2: den erfindungsgemäßen Anhänger mit angehobener Hubplattform,
- Fig. 3: einen Blick in die Hubeinrichtung im abgesenkten Zustand bei abgenommener Hubplattform,
- Fig. 4: die Hubeinrichtung aus Fig. 3 im angehobenen Zustand,
- Fig. 5: eine Schnittansicht entlang der Linie V-V aus Fig. 2 bei angehobenem Innenwagen,
- Fig. 6: die Schnittansicht aus Fig. 5 bei gerade abgesetztem Innenwagen, und
- Fig. 7: die Schnittansicht aus den Fign. 5 und 6 bei ausgeschobenem Innenwagen.

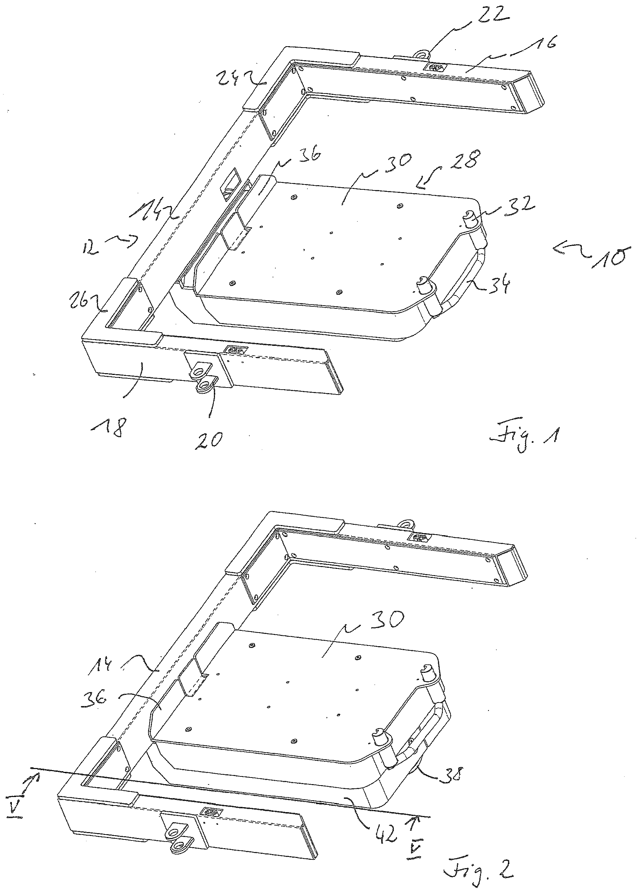

Fig. 1 zeigt einen erfindungsgemäßen Anhänger 10, der einen U-förmigen Rahmen 12 besitzt. Der Rahmen 12 besitzt eine Längsstrebe 14, an deren Enden zwei parallele Schenkel 16, 18 vorgesehen sind. In der dargestellten Ausführungsform des erfindungsgemäßen Anhängers ist am Schenkel 18 eine Anhängeröse 20 vorgesehen. An dem gegenüberliegenden Schenkel 16 ist eine entsprechende Anhängeröse 22 vorgesehen. Unter Verwendung einer Deichsel (nicht dargestellt) können so die Anhängerösen 20, 22 mit einem entsprechenden Deichselende verbunden werden, um einen geschleppten Routenzug zu bilden. Im Bereich der Verbindung zwischen der Längsstrebe 14 und den Schenkeln 16, 18 sind zusätzliche Versteifungswinkel 24, 26 vorgesehen, die dem Rahmen 12 eine ausreichende Steifigkeit verleihen.

Zwischen den Schenkeln 16 und 18 ist eine Hubeinrichtung 28 mit einer Hubplattform 30 vorgesehen. Die Hubplattform 30 bietet eine im Wesentlichen ebene Fläche, auf der ein zu transportierender Innenwagen mit seiner Bodenplatte abgestellt werden kann. Über unterhalb der Hubplattform 30 angeordnete Hubmittel kann die Hubplattform angehoben werden (vgl. Fig. 2). Die Hubplattform 30 besitzt an ihrem zur Längsstrebe 14 weisenden Ende einen Vorschubsteg 36, an dem ein aufgeschobener und angehobener Innenwagen anliegt. Wie in Fig. 1, und hier insbesondere im Vergleich zu Fig. 2, zu erkennen, zeigt Fig. 1 die abgesenkte Position der Hubplattform, in der der Vorschubsteg 36 von der Längsstrebe 14 beabstandet ist. In der angehobenen Position der Hubplattform 30, wie sie in Fig. 2 dargestellt ist, liegt der Vorschubsteg 36 an der Längsstrebe 14 an.

Fig. 1 zeigt weiterhin zwei Verriegelungszapfen 32, die über ein Betätigungselement 34 gelöst und/oder betätigt werden können. Die Verriegelungszapfen 32 dienen dazu, einen auf der Hubeinrichtung befindlichen Innenwagen für den Transport zu sichern und ein Heruntergleiten des Innenwagens von der Hubplattform zu verhindern. Beim Entfernen des Innenwagens können die Verriegelungszapfen 32 mit Hilfe des Betätigungselements 34 gelöst werden.

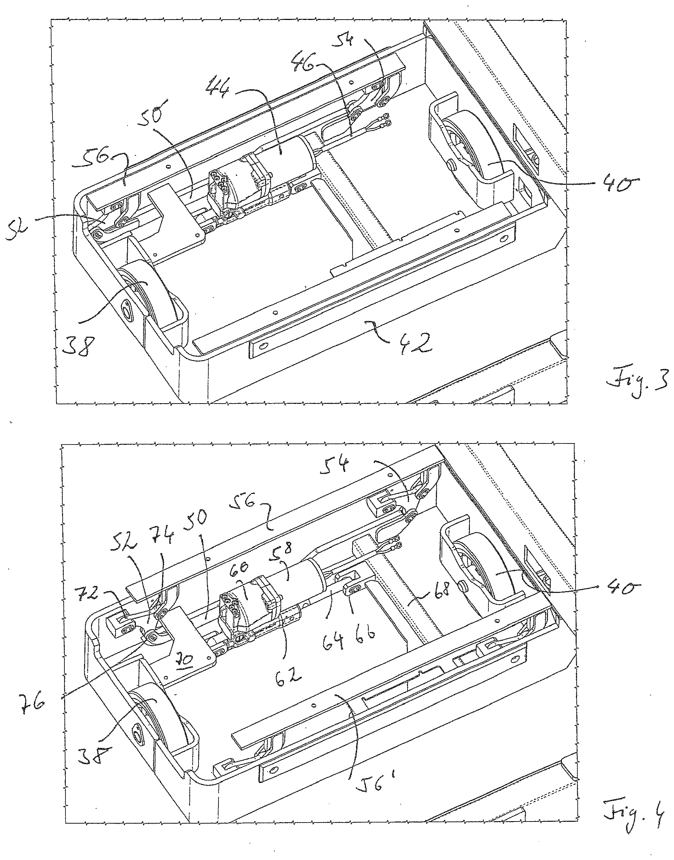

Der Anhänger ruht auf zwei rahmenfest an der Hubeinrichtung angebrachten Rädern. In Fig. 2 ist das von der Längsstrebe 14 fortweisende Rad 38 zu erkennen, in den Fign. 3 und 4 sind beide Räder 38 und 40 zu erkennen. Die Räder sind starr in Zugrichtung des Anhängers ausgerichtet und können sich unabhängig voneinander drehen, beispielsweise zur Kurvenfahrt.

Wie in den Fign. 1 und 2 zu erkennen, besteht die Hubeinrichtung 28 aus einem rahmenfest vorgesehenen Mittelabschnitt 42, der tiefer als die Schenkel 16, 18 und die Längsstrebe 14 angeordnet ist. Der nach oben hin offene Mittelabschnitt 42 wird durch die Hubplattform 30 verschlossen, wobei in dem Mittelabschnitt 42 die Aggregate und das Getriebe zum Anheben der Hubplattform 30 angeordnet sind.

Fig. 3 zeigt einen Blick in den Mittelabschnitt 42 bei abgenommener Hubplattform. Deutlich zu erkennen sind die beiden nicht lenkbar angeordneten Räder 38, 40, die an dem Mittelabschnitt 42 rahmenfest gehalten sind. Ferner ist ein elektrohydraulisches Kompaktaggregat 44 vorgesehen, das über die nicht weiter angeschlossene elektrische Versorgungsleitung 46 elektrisch gespeist wird. Das Kompaktaggregat 44 betätigt eine Zug-/Druckstange 50, die an einem vorderen Dreieckhebel 52 und einem hinteren Dreieckhebel 54 angreift. Wie in Fig. 3 zu erkennen, ist in der abgesenkten Position die Zug-/Druckstange 50 in eine Position geschoben, in der eine Auflageleiste 56 für die Hubplattform abgesenkt ist. Durch eine Bewegung der Zug-/Druckstange 50 werden die Dreieckhebel 52, 54 verschwenkt und die Auflageleiste 56 für die Hubplattform angehoben. Der Aufbau wiederholt sich an der gegenüberliegenden Auflageleiste 56', die ebenfalls über zwei Dreieckhebel und eine dazwischen wirkende Zug-/Druckstange angehoben und abgesenkt wird.

Wie in Fig. 4 zu erkennen, besteht das Kompaktaggregat 44 aus einem Elektromotor 58, der eine Hydraulikpumpe 60 für einen darunterliegenden Hydraulikzylinder 62 antreibt. Der Hydraulikzylinder 62 besitzt eine Kolbenstange 64, die über eine Öse 66 schwenkbar an einer Querstange 68 angeordnet ist. Die Querstange 68 ist an ihrem Ende mit der Zug-/Druckstange 50 verbunden, die an ihren freien Enden schwenkbar mit den Dreieckshebeln 52, 54 verbunden sind. Die Querstange 68 und die Zug-/Druckstange 50 bilden einen H-förmigen Rahmen, der mit Hilfe des Hydraulikzylinders 62 verstellt wird. Der Hydraulikzylinder 62 ist an seinem der Kolbenstange 64 gegenüberliegenden Ende rahmenfest an einem Winkelelement 70 angeordnet. Bei einer Verstellbewegung der Hubplattform bzw. der Befestigungsleiste 56 erfolgt sowohl die Hub- als auch die Senkbewegung durch eine Betätigung des Hydraulikzylinders 62. Zusätzlich kann ein Federelement vorgesehen sein, das im angehobenen Zustand komprimiert ist und bei der Absenkbewegung sich entspannt und das Ausschieben des Innenwagens unterstützt. Das Federelement kann in dem Hydraulikzylinder integriert oder separat, beispielsweise als Gasdruckfeder vorgesehen sein.

Die Dreieckhebel 52, 54 sind an einem ersten Ende 72 schwenkbar am Rahmen angeordnet. Das zweite Ende 74 steht schwenkbar über die Befestigungsleiste 56 mit der Hubplattform in Verbindung, wobei in den Fign. 3 und 4 die Befestigungsleiste 56 zu erkennen ist, auf der die Hubplattform angeordnet ist. Das dritte Ende 76 der Dreieckhebel 52, 54 steht mit der Zug-/Druckstange 50 in Verbindung.

Bei einer Betätigung des Hydraulikzylinders 62 bewegt die Kolbenstange 64 die Querstrebe 68 und über die Zug-/Druckstange 50 das dritten Ende 76 der Dreieckhebel. Aufgrund der Bewegung schwenkt das zweite Ende 74 auf einen Kreisbogen, dessen Zentrum in der rahmenfesten Anbindung 72 liegt. Bei dem Hubvorgang wird das Hydraulikaggregat betätigt und der Hydraulikzylinder 62 mit Hydraulikfluid beaufschlagt. Beim Senkvorgang wird ein Ventil (nicht dargestellt) geöffnet und das Hydraulikfluid abgelassen. Aufgrund der Anordnung der Dreieckhebel geht die Hubplattform aus dem Senkvorgang in eine waagerechte Schubbewegung über und der bereits Bodenkontakt habende Innenwagen wird beim Schubvorgang aus dem Rahmen geschoben. Um diese Schubbewegung zu unterstützen, ist das Federelement, beispielsweise in Form einer Gasdruckfeder, vorgesehen, das im angehobenen Zustand angespannt ist und im Absenkvorgang sich durch eine Bewegung in Ausschubrichtung zunehmend entspannt. Das Federelement wirkt im Wesentlichen parallel zu dem Hydraulikzylinder.

Neben dem erläuterten Kompaktaggregat ist es auch möglich, anders ausgebildete hydraulische Aggregate einzusetzen. Auch kann beispielsweise auf rein elektrische Antriebe, wie beispielsweise Spindelantriebe, abgestellt werden. Bei einem elektrischen Antrieb, der auch bei der Senkbewegung angetrieben wird, kann auf die unterstützende Wirkung des Federelements verzichtet werden.

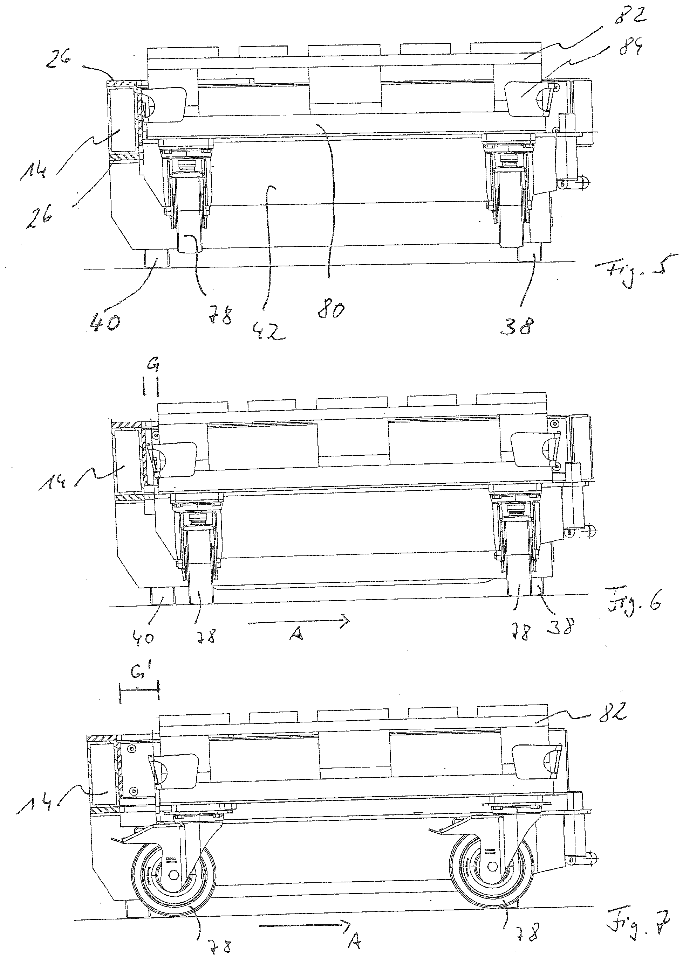

Fig. 5 zeigt eine Schnittansicht entlang der Linie V-V aus Fig. 2 bei einem angehobenen Innenwagen. In Fig. 5 ist die geschnittene Längsstrebe 14 sowie ihre in den Ecken angeordneten Versteifungswinkel 26 zu erkennen. Der Innenwagen besitzt Lenkrollen 78, die an einem Wagenboden 80 angeordnet sind. Auf dem Wagenboden 80 steht eine leere Palette 82, die an ihren Ecken über Halter 84 auf dem Wagenboden 80 gesichert ist. Der Innenwagen ist angehoben, so dass die lenkbaren Räder 78 vom Boden freikommen. Zu erkennen ist ferner, dass die Räder 38, 40 des Anhängers aus dem Mittelabschnitt 42 der Hubeinrichtung vorstehen und Bodenkontakt besitzen.

Fig. 6 zeigt den gerade abgesetzten Innenwagen, bei dem die Lenkrollen 78 anfangen, den Boden zu berühren. Wie in Fig. 6 zu erkennen, besitzen die Lenkrollen 78 hier noch eine Orientierung quer zur Ausschubrichtung A. Bei dieser Absenkbewegung liegt ein Abstand G zwischen der Längsstrebe 14 und dem zugehörigen Palettenrand 82 vor. Fig. 7 zeigt den vollständig abgesetzten und in Richtung A vorgeschobenen Innenwagen, bei dem sich der Abstand zwischen Längsstrebe 14 und Palettenrand 82 zu G' vergrößert hat. Wie zu erkennen, sind nunmehr die Räder 78 ausgerichtet, um den Innenwagen besser benutzen zu können.

### Bezugszeichenliste

- 10: Anhänger
- 12: Rahmen
- 14: Längs strebe
- 16: Schenkel
- 18: Schenkel
- 20: Anhängeröse
- 22: Anhängeröse
- 24: Versteifungswinkel
- 26: Versteifungswinkel
- 28: Hubeinrichtung
- 30: Hubplattform
- 32: Verriegelungszapfen
- 34: Betätigungselement
- 36: Vorschubsteg
- 38: Rad
- 40: Rad
- 42: Mittelabschnitt
- 44: Kompaktaggregat
- 46: Versorgungsleitung
- 50: Zug-/Druckstange
- 52: Dreieckhebel
- 54: Dreieckhebel
- 56: Befestigungsleiste
- 58: Elektromotor
- 60: Hydraulikpumpe
- 62: Hydraulikzylinder
- 64: Kolbenstange
- 66: Öse
- 68: Querstange
- 72: erstes Ende
- 74: zweites Ende
- 76: drittes Ende
- 78: Lenkrollen
- 80: Wagenboden
- 82: Palette
- 84: Halter

## Patentansprüche

1. Anhänger für einen Routenzug mit einem Rahmen (12), der eine Hubeinrichtung mit einer Hubplattform (30) aufweist, auf der ein zu transportierende Innenwagen in einem angehobenen Zustand ruht, wobei
die Hubeinrichtung eine Zug-/Druckstange (50) und mindestens einen Dreieckhebel (52, 54) aufweist, der mit einem ersten Ende (72) an dem Rahmen (12), einem zweiten Ende (74) an der Hubplattform (30) und einem dritten Ende (76) an der Zug-/Druckstange (50) schwenkbar gelagert ist, wobei die Hubplattform (30) über den mindestens einen Dreieckhebel (52, 54) in der Höhe verstellbar ist, bei der die Hubplattform (30) eine bogenförmige Schwenkbewegung ausführt und bei einer Senkbewegung sich so weit absenkt, dass der Innenwagen von der Hubplattform (30) freikommt,
**dadurch gekennzeichnet, dass**
der Innenwagen mit Bodenkontakt quer zur Absenkrichtung eine vorbestimmte Strecke aus dem Rahmen (12) geschoben wird.

2. Anhänger nach Anspruch 1, **dadurch gekennzeichnet, dass** der Anhänger (10) einen U-förmigen Rahmen (12) mit zwei Schenkeln (16, 18) und einer die Schenkel verbindenden Längsstrebe (14) aufweist, wobei die Hubplattform (30) an der Längsstrebe (14) zwischen den Schenkeln (16, 18) angeordnet ist.

3. Anhänger nach Anspruch 1 oder 2, **dadurch gekennzeichnet, dass** die Hubplattform (30) einen Ausschubvorsprung aufweist, der mit einem zu transportierenden Innenwagen zusammenwirkt und den Innenwagen bei einer Senkbewegung der Hubplattform (30) aus dem Rahmen (12) vorschiebt.

4. Anhänger nach Anspruch 3, **dadurch gekennzeichnet, dass** der Ausschubvorsprung als ein parallel zum Rahmen (12) und zum Längsschenkel angeordneter Steg auf der Hubplattform (30) ausgebildet ist.

5. Anhänger nach einem der Ansprüche 1 bis 4, **dadurch gekennzeichnet, dass** die Hubeinrichtung eine elektrohydraulische Einheit aufweist, die mindestens eine Zug-/Druckstange (50) zum Heben und Senken der Hubplattform (30) betätigt.

6. Anhänger nach einem der Ansprüche 1 bis 5, **dadurch gekennzeichnet, dass** die Hubeinrichtung ein Federelement aufweist, das sich bei einer Senkbewegung entspannt und die Hubplattform (30) bei der Senkbewegung aus dem Rahmen vorschiebt.

## Claims

1. Trailer for a route train having a frame (12) which has a lifting device with a lifting platform (30) on which an inner carriage which is to be transported rests in a lifted state, the lifting device having a pull/push-rod (50) and at least one triangular lever (52, 54) which is pivotably mounted with a first end (72) on the frame (12), a second end (74) on the lifting platform (30) and a third end (76) on the pull/push-rod (50), the lifting platform (30) being adjustable in height via the at least one triangular lever (52, 54), in which the lifting platform (30) executes an arcuate pivoting movement and, in the event of a lowering movement, is lowered to such an extent that the inner carriage is released from the lifting platform (30), **characterized in that** the inner carriage is pushed out of the frame (12) by a predetermined distance with ground contact transversely to the lowering direction.

2. A trailer according to claim 1, **characterized in that** the trailer (10) comprises a U-shaped frame (12) with two legs (16, 18) and a longitudinal strut (14) connecting the legs, the lifting platform (30) being arranged on the longitudinal strut (14) between the legs (16, 18).

3. Trailer according to Claim 1 or 2, **characterized in that** the lifting platform (30) has an ejection projection which interacts with an inner carriage which is to be transported and pushes the inner carriage out of the frame (12) during a lowering movement of the lifting platform (30).

4. Trailer according to claim 3, **characterised in that** the ejection projection is in the form of a bridge arranged parallel to the frame (12) and to the longitudinal leg on the lifting platform (30).

5. A trailer according to any of claims 1 to 4, **characterized in that** the lifting device comprises an electrohydraulic unit actuating at least one pull/push-rod (50) for raising and lowering the lifting platform (30).

6. Trailer according to one of claims 1 to 5, **characterized in that** the lifting device has a spring element which relaxes during a lowering movement and pushes the lifting platform (30) out of the frame during the lowering movement.

## Revendications

1. Remorque d'un chariot tracteur doté d'un châssis (12), qui présente un dispositif de levage avec une plate-forme de levage (30), sur laquelle un chariot intérieur à transporter repose dans un état soulevé, dans laquelle
le dispositif de levage présente une barre de poussée/traction (50) et au moins un levier triangulaire (52, 54), qui est monté par une première extrémité (72) sur le châssis (12), par une deuxième extrémité (74) sur la plate-forme de levage (30) et par une troisième extrémité (76) sur la barre de poussée/traction (50) de manière à pouvoir pivoter, dans laquelle la plate-forme de levage (30) est réglable en hauteur au moyen de l'un au moins des leviers triangulaires (52, 54), la plate-forme de levage (30) exécutant alors un mouvement de pivotement en forme d'arc et s'abaissant lors d'un mouvement de descente jusqu'à ce que le chariot intérieur sorte de la plate-forme de levage (30),
**caractérisée en ce que**
le chariot intérieur en contact avec le sol est déplacé d'une distance prédéterminée hors du châssis (12) perpendiculairement au sens de la descente.

2. Remorque selon la revendication 1, **caractérisée en ce que** la remorque (10) présente un châssis en forme de U (12) doté de deux traverses (16, 18) et d'un longeron (14) reliant les traverses, dans laquelle la plate-forme de levage (30) est disposée sur le longeron (14) entre les traverses (16, 18).

3. Remorque selon la revendication 1 ou 2, **caractérisée en ce que** la plate-forme de levage (30) présente un épaulement d'extraction, qui interagit avec un chariot intérieur à transporter et fait avancer le chariot intérieur hors du châssis (12) lors d'un mouvement de descente de la plate-forme de levage (30).

4. Remorque selon la revendication 3, **caractérisée en ce que** l'épaulement d'extraction est conçu sous la forme d'un pont disposé parallèlement au châssis (12) et à la traverse longitudinale sur la plate-forme de levage (30).

5. Remorque selon l'une des revendications 1 à 4, **caractérisée en ce que** le dispositif de levage présente une unité électrohydraulique, qui actionne au moins une barre de poussée/traction (50) pour soulever et abaisser la plate-forme de levage (30).

6. Remorque selon l'une des revendications 1 à 5, **caractérisée en ce que** le dispositif de levage présente un élément à ressort, qui se détend lors d'un mouvement de descente et fait avancer la plate-forme de levage (30) hors du châssis lors du mouvement de descente.
